(19) Europäisches Patentamt / European Patent Office / Office européen des brevets

(11) **EP 2 116 036 B1**

(12) **EUROPEAN PATENT SPECIFICATION**

(45) Date of publication and mention
of the grant of the patent:
**03.04.2013 Bulletin 2013/14**

(21) Application number: **07703871.9**

(22) Date of filing: **15.01.2007**

(51) Int Cl.:
*H04M 3/56* (2006.01)    *H04M 7/00* (2006.01)
*H04L 29/06* (2006.01)    *H04L 12/58* (2006.01)

(86) International application number:
**PCT/EP2007/050355**

(87) International publication number:
**WO 2008/086885 (24.07.2008 Gazette 2008/30)**

(54) **IDENTIFYING PARTICIPANTS IN A CONFERENCE**

IDENTIFIZIERUNG VON TEILNEHMERN EINER FERNSPRECHKONFERENZ

IDENTIFICATION DE PARTICIPANTS À UNE CONFÉRENCE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**11.11.2009 Bulletin 2009/46**

(73) Proprietor: **Telefonaktiebolaget LM Ericsson (publ)**
**164 83 Stockholm (SE)**

(72) Inventors:
• **CAMARILLO, Gonzalo, Gonzalez**
**FIN-00150 Helsingfors (FI)**
• **NOVO, Oscar, Diaz**
**FIN-00420 Helsingfors (FI)**

(74) Representative: **Talbot-Ponsonby, Daniel Frederick et al**
**Marks & Clerk LLP**
**Fletcher House**
**Heatley Road**
**The Oxford Science Park**
**Oxford OX4 4GE (GB)**

(56) References cited:
• **CAMARILLO ERICSSON J OTT HELSINKI UNIVERSITY OF TECHNOLOGY K DRAGE LUCENT TECHNOLOGIES G: "The Binary Floor Control Protocol (BFCP)" IETF STANDARD-WORKING-DRAFT, INTERNET ENGINEERING TASK FORCE, IETF, CH, vol. xcon, no. 6, 29 November 2005 (2005-11-29), XP015042755 ISSN: 0000-0004**
• **ROSENBERG CISCO SYSTEMS H SCHULZRINNE COLUMBIA UNIVERSITY O LEVIN J ET AL: "A Session Initiation Protocol (SIP) Event Package for Conference State" IETF STANDARD-WORKING-DRAFT, INTERNET ENGINEERING TASK FORCE, IETF, CH, vol. sipping, no. 12, 1 July 2005 (2005-07-01), XP015040700 ISSN: 0000-0004**

**Description**

Field of the Invention

The present invention relates to the identification of participants in a conference. In particular, although not exclusively, the invention relates to a system by which one participant can obtain knowledge of all the other participants in a Push-to-talk over Cellular (PoC) conference, and any conference operated according to the Binary Floor Control Protocol (BFCP).

Background to the Invention

IP Multimedia services provide a dynamic combination of voice, video, messaging, data, etc. within the same session. By growing the number of basic applications and the media which it is possible to combine, the number of services offered to the end users will grow, and the inter-personal communication experience will be enriched. This will lead to a new generation of personalised, rich multimedia communication services.

IP Multimedia Subsystem (IMS) is the technology defined by the Third Generation Partnership Project (3GPP) to provide IP Multimedia services over mobile communication networks (3GPP TS 22.228, TS 23.228, TS 24.229, TS 29.228, TS 29.229, TS 29.328 and TS 29.329 Releases 5 to 7). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS makes use of the Session Initiation Protocol (SIP) to set up and control calls or sessions between user terminals (or user terminals and application servers).. Whilst SIP was created as a user-to-user protocol, IMS allows operators and service providers to control user access to services and to charge users accordingly.

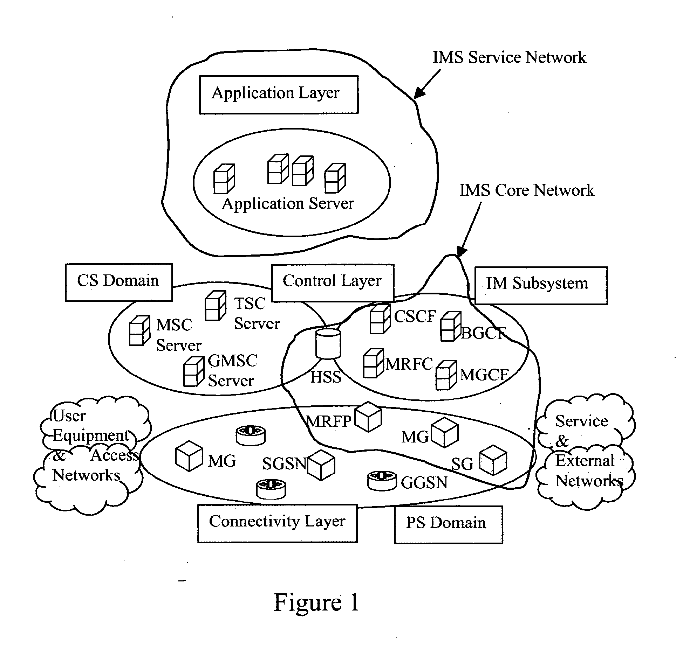

Figure 1 illustrates schematically how the IMS fits into a mobile network architecture in the case of a Packet Switched (PS) and Circuit Switched (CS) access domains. Call/Session Control Functions (CSCFs) operate as SIP proxies with the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

One of the first and most important services provided by the IMS is Push-to-talk over Cellular (PoC). PoC is a multi-party conference service that is similar to a traditional "Walkie-Talkie" service. Users press and hold a button when they want to talk, but they don't start speaking until their terminal tells them to do so, and release it when they finish talking. All other users in the conference will hear the speech.

PoC has some advantages over other voice services. Traditional mobile phone networks and devices utilize full-duplex communications (using separate frequencies for transmission and reception) which allow customers to call other persons on a mobile or land-line network and be able to simultaneously talk and hear the other party. Such communications require a connection to be started by dialling a phone number and the other party answering the call, and the connection remains active until either party ends the call or the connection is dropped due to signal loss or a network outage. PoC allows casual transmissions to be sent to other parties on the network without first dialling them up, in a similar manner to two-way radios. PoC is a half-duplex service, (using a single frequency) which means that only one user can talk at a time. PoC does not require high-bandwidth links and, thus, does not require the deployment of new radio technologies.

PoC currently uses the Talk Burst Control Protocol (TBCP). TBCP is a Real Time Control Protocol (RTCP)-based floor control specific to PoC. That is, TBCP is only used in PoC.

The IETF has developed a floor control standard called Binary Floor Control Protocol (BFCP). BFCP is a general protocol that, as a binary protocol, can be used in low-bandwidth interfaces. It is possible that BFCP may replace TBCP in future versions of PoC. Some implementations of BFCP are already in use, for example in conferencing servers that provide moderated conferences. Details can be found in the Internet draft "draft-ietf-xcon-bfcp-06.txt", Camarillo et al., IETF, CH, vol. xcon, no. 6, 29 November 2005, ISSNN 0000-0004 (http://tools.ietf.org/id/draft-ietf-xcon-bfcp-06.txt).

The BFCP does not define a method to provide a floor participant with knowledge of all the participants who are participating in a conference. In order to obtain this functionality, user agents normally use the Session Initiation Protocol (SIP) Event Package for Conference State, as defined in RFC 4575.

However, the SIP Event Package for Conference State does not define any floor control related information. There is thus currently no way to obtain the floor information data of every participant.

Work is currently being performed by the IETF Centralized Conferencing (XCON) working group to develop an extension to the SIP Event Package for Conference State to support some floor information. However, many user agents do not implement the SIP Event Package for Conference State. This is because it is based on XML, and XML based protocols are not very efficient in low-bandwidth interfaces, such as some mobile networks.

Summary of the Invention

The invention generally provides for an extension to BFCP to support a request for floor information, and provides a way to obtain the floor information data of every user within BFCP. BFCP is a binary protocol which has been designed to be very efficient and does not require high-bandwidth links. As such, it is suitable for use in low-bandwidth interfaces, such as some mobile networks.

In accordance with one aspect of the present invention there is provided a method of obtaining data about participants in a mobile telecommunications BFCP conference. The method comprises sending a general query message from a floor participant or floor chair to a floor control server, the general query message containing a primitive for informing the floor control server that information is requested about all the participants in the conference. In response to the general query message, a general status message is sent from the floor control server to the floor participant or floor chair, the general status message containing information about all the participants in the conference. The general status message preferably includes an identification of each of the participants in the conference.

The general status message may include a grouped attribute which contains a beneficiary-information attribute and a floor-request-information attribute for each of the participants in the conference.

Thus query messages and status messages may be used, within an existing BFCP system, to obtain information about all the participants in the conference, with the provision of additional BFCP operations.

This may be incorporated simply into BFCP, and provide an efficient solution. Devices with low-bandwidth interfaces, such as mobile phones, can use this solution.

The invention also provides a mobile telecommunications terminal, adapted to participate in a Binary Floor Control Protocol conference, the terminal being arranged to send a general query message to a floor control server, the general query message containing a primitive for informing the floor control server that information is requested about all of the participants in the conference, and to receive a general status message from the floor control server, the general status message containing information about all the participants in the conference.

The invention further provides a node in an IP Multimedia Subsystem network, adapted to operate as a floor control server for a Binary Floor Control Protocol conference, the node being arranged to:

> receive a general query message from a floor participant, the general query message containing a primitive informing the node that information is requested about all of the participants in the conference; and
>
> in response to the query message, send a general status message to the floor participant, the general status message including information about all of the participants in the conference.

Brief Description of the Drawings

> Figure 1 illustrates schematically the architecture of an IP Multimedia Subsystem in a mobile communications system.
> Figure 2 is a schematic illustration of a BFCP conference.

Detailed Description of the Preferred Embodiment

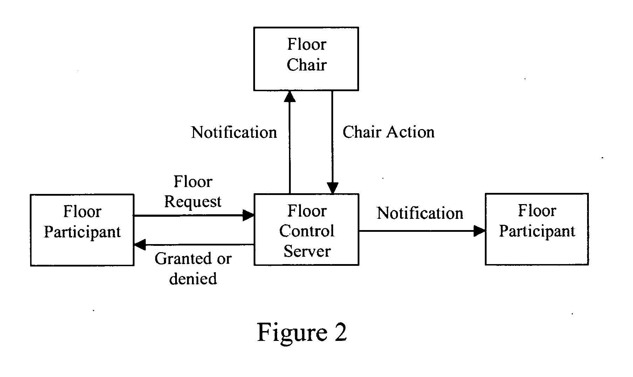

Figure 2 illustrates the tasks currently performed by the BFCP. BFCP generally provides a means:

- for floor participants to send floor requests to floor control servers.
- for floor control servers to grant or deny requests to access a given resource from floor participants.
- for floor chairs to send floor control servers decisions regarding floor requests.
- for floor control servers to keep floor participants and floor chairs informed about the status of a given floor or a given floor request.

BFCP packets consist of a 12-octet common header followed by attributes. The common header includes an 8-bit field called a "primitive" which identifies the main purpose of the message.

BFCP specifies two primitives which are related to the request of information about a single floor participant in the conference: *UserQuery* and *UserStatus*. Redefining the behaviour of these operations enables floor participants to request floor information about all of the floor participants in the conference.

The primitive *UserQuery* enables a client (either a floor participant or a floor chair) to request information about another participant in the conference. This is achieved by sending the primitive to the floor control server. A UserQuery message (with the *UserQuery* primitive in the common header) has the following format:

$$\text{UserQuery} = \text{(COMMON-HEADER)}$$
$$\text{[BENEFICIARY-ID]}$$
$$* \text{[EXTENSION-ATTRIBUTE]}$$

The beneficiary-id attribute in the UserQuery message is used to identify the participant about which information is requested.

When the floor control server receives the UserQuery message, it returns a UserStatus message (with the *UserStatus* primitive in the common header) to the client. The UserStatus message typically contains information about the participant identified in the UserQuery message and has the following format:

$$\text{UserStatus} = \text{(COMMON-HEADER)}$$
$$\text{[BENEFICIARY-INFORMATION]}$$
$$* \text{(FLOOR-REQUEST-INFORMATION)}$$
$$* \text{[EXTENSION-ATTRIBUTE]}$$

The beneficiary-id attribute in the UserQuery message is generally used to identify a single floor participant. However, this message can be modified to request floor information about all of the floor participants in the conference, by assigning a value of zero to this attribute.

On receiving a UserQuery message with a beneficiary-id attribute set to zero, the floor control server sends as many UserStatus messages as there are participants in the conference.

An alternative approach for enabling a request floor information about all of the floor participants in the conference may also be used, which does not require modification of the behaviour of the *UserQuery* and *UserStatus* messages. This alternative approach involves the use of two new BFCP messages, one to be sent by a floor participant or floor chair, and one to be sent by a floor control server. The first new message is that to be sent by the floor participant or floor chair, and this message has a format as follows:

$$\text{New operation 1} = \text{(COMMON-HEADER)}$$
$$* \text{[EXTENSION-ATTRIBUTE]}$$

The message has the specific purpose of requesting, from the floor control server, the floor information of all of the participants in the conference, and this purpose is identified by a new primitive in the COMMON-HEADER attribute. The name of the primitive is not specified. It will be appreciated that any name and value of the new primitive may be used.

On receiving the New operation 1 message, the floor control server responds with the second new message (*New operation 2*), whose definition is as follows:

$$\text{New operation 2} = \text{(COMMON-HEADER)}$$
$$* \text{(NEW-ATTRIBUTE)}$$
$$* \text{[EXTENSION-ATTRIBUTE]}$$

This message contains information about every floor participant in the conference in the NEW-ATTRIBUTE attribute. The NEW-ATTRIBUTE attribute is a grouped attribute that contains the beneficiary-information and floor-request-information attributes:

NEW-ATTRIBUTE= (NEW-ATTRIBUTE-HEADER)

(BENEFICIARY-INFORMATION)

(FLOOR-REQUEST-INFORMATION)

\* [EXTENSION-ATTRIBUTE]

.

Every NEW-ATTRIBUTE contains information about one participant. The new message New operation 2 contains as many NEW-ATTRIBUTES attributes as a participants in the conference.

Thus the floor information for all of the participants in the conference are returned to the participant who requested this information by sending a New operation 2 message to that participant.

It will be appreciated that variations from the above described embodiments may still fall within the scope of the invention. For example, it is described that the beneficiary-id attribute in a UserQuery message can be set to zero to inform the floor control server that information is requested for all the participants in the conference. It will be appreciated that other values for the beneficiary-id could also be used, as long as they are understood by the floor control server as instructions to provide information about all participants.

**Claims**

1. A method of obtaining data about participants in a mobile telecommunications Binary Floor Control Protocol conference, comprising:

   sending a general query message from a floor participant or floor chair to a floor control server, the general query message containing a primitive for informing the floor control server that information is requested about all the participants in the conference; and
   in response to the general query message, sending a general status message from the floor control server to the floor participant or floor chair, the general status message containing information about all the participants in the conference.

2. The method of claim 1, wherein the general status message includes an identification of each of the participants in the conference.

3. The method of claim 1 or 2, wherein the general status message includes a grouped attribute which contains a beneficiary-information attribute and a floor-request-information attribute for each of the participants in the conference.

4. A mobile telecommunications terminal, adapted to participate in a Binary Floor Control Protocol conference, the terminal being arranged:

   to send a general query message to a floor control server, the general query message containing a primitive for informing the floor control server that information is requested about all of the participants in the conference; and
   to receive a general status message from the floor control server, the general status message containing information about all the participants in the conference.

5. The terminal of claim 4, including means enabling the terminal to participate in the method of claim 2 or 3.

6. A node in an IP Multimedia Subsystem network, adapted to operate as a floor control server for a Binary Floor Control Protocol conference, the node being arranged to:

   receive a general query message from a floor participant, the general query message containing a primitive informing the node that information is requested about all of the participants in the conference; and
   in response to the general query message, send a general status message to the floor participant, the general status message containing information about all of the participants in the conference.

7. The node of claim 6, adapted to participate in the method of claim 2 or 3.


**Patentansprüche**

1. Verfahren zum Erfassen von Daten über Teilnehmer an einer Mobiltelekommunikations-BFCP(Binär-Floor-Steuerprotokoll)-Konferenz, Folgendes umfassend:

    Senden einer allgemeinen Abfragenachricht von einem Floor-Teilnehmer oder Floor-Vorsitz an einen Floor-Steuerserver, wobei die allgemeine Abfragenachricht ein Primitiv enthält, um den Floor-Steuerserver zu informieren, dass Information über alle Teilnehmer an der Konferenz angefordert wird; und
    als Antwort auf die allgemeine Abfragenachricht eine allgemeine Statusnachricht vom Floor-Steuerserver an den Floor-Teilnehmer oder den Floor-Vorsitz senden, wobei die allgemeine Statusnachricht Information über alle Teilnehmer an der Konferenz enthält.

2. Verfahren nach Anspruch 1, worin die allgemeine Statusnachricht eine Identifikation eines jeden der Teilnehmer an der Konferenz einschließt.

3. Verfahren nach Anspruch 1 oder 2, worin die allgemeine Statusnachricht ein gruppiertes Attribut einschließt, das ein Nutznießer-Informations-Attribut und ein Floor-Anforderungsinformations-Attribut für jeden Teilnehmer an der Konferenz enthält.

4. Mobiltelekommunikations-Endgerät, angepasst zum Teilnehmen an einer BFCP(Binär-Floor-Steuerprotokoll)-Konferenz, wobei das Endgerät dazu angeordnet ist:

    eine allgemeine Abfragenachricht an einen Floor-Steuerserver zu senden, wobei die allgemeine Abfragenachricht ein Primitiv enthält, um den Floor-Steuerserver zu informieren, dass Information über alle Teilnehmer an der Konferenz angefordert wird; und
    eine allgemeine Statusnachricht vom Floor-Steuerserver zu empfangen, wobei die allgemeine Statusnachricht Information über alle Teilnehmer an der Konferenz enthält.

5. Endgerät nach Anspruch 4, ein Mittel einschließend, das dem Endgerät ermöglicht, am Verfahren nach Anspruch 2 oder 3 teilzunehmen.

6. Knoten in einem IP-Multimedien-Subsystemnetz, dazu angepasst, als ein Floor-Steuerserver für eine BFCP(Binär-Floor-Steuerprotokoll)-Konferenz zu arbeiten, wobei der Knoten dazu angeordnet ist, um:

    eine allgemeine Abfragenachricht von einem Floor-Teilnehmer zu empfangen, wobei die allgemeine Abfragenachricht ein Primitiv enthält, das den Knoten informiert, dass Information über alle Teilnehmer an der Konferenz angefordert wird; und
    als Antwort auf die allgemeine Abfragenachricht eine allgemeine Statusnachricht an den Floor-Teilnehmer zu senden, wobei die allgemeine Statusnachricht Information über alle Teilnehmer an der Konferenz enthält.

7. Knoten nach Anspruch 6, dazu angepasst, am Verfahren nach Anspruch 2 oder 3 teilzunehmen.


**Revendications**

1. Procédé d'obtention de données concernant des participants à une conférence par protocole de contrôle à codage binaire de la prise de parole de télécommunications mobiles, comprenant :

    l'envoi d'un message de requête générique, d'un participant d'étage ou poste d'étage à un serveur de commande d'étage, le message de requête générique contenant une primitive destinée à signaler au serveur de commande d'étage que des informations sont demandées concernant la totalité des participants à la conférence ; et
    en réponse au message de requête générique, l'envoi d'un message d'état générique, du serveur de commande d'étage au participant d'étage ou poste d'étage, le message d'état générique contenant des informations concernant la totalité des participants à la conférence.

**2.** Procédé selon la revendication 1, dans lequel le message d'état générique inclut une identification de chacun des participants à la conférence.

**3.** Procédé selon la revendication 1 ou 2, dans lequel le message d'état générique inclut un attribut groupé qui contient un attribut d'informations sur les bénéficiaires et un attribut d'informations sur les demandes d'étage pour chacun des participants à la conférence.

**4.** Terminal de télécommunication mobile, apte à participer à une conférence par protocole de contrôle à codage binaire de la prise de parole, le terminal étant agencé de manière à :

envoyer un message de requête générique à un serveur de commande d'étage, le message de requête générique contenant une primitive destinée à signaler au serveur de commande d'étage que des informations sont demandées concernant la totalité des participants à la conférence ; et
recevoir un message d'état générique à partir du serveur de commande d'étage, le message d'état générique contenant des informations concernant la totalité des participants à la conférence.

**5.** Terminal selon la revendication 4, comprenant un moyen permettant au terminal de prendre part au procédé selon la revendication 2 ou 3.

**6.** Noeud dans un réseau de sous-système multimédia IP, apte à fonctionner en qualité de serveur de commande d'étage pour une conférence par protocole de contrôle à codage binaire de la prise de parole, le noeud étant agencé de manière à :

recevoir un message de requête générique en provenance d'un participant d'étage, le message de requête générique contenant une primitive destinée à signaler au noeud que des informations sont demandées concernant la totalité des participants à la conférence ; et
en réponse au message de requête générique, envoyer un message d'état générique au participant d'étage, le message d'état générique contenant des informations sur la totalité des participants à la conférence.

**7.** Noeud selon la revendication 6, apte à prendre part au procédé selon la revendication 2 ou 3.

IMS Service Network

Application Layer

Application Server

IMS Core Network

CS Domain

Control Layer

IM Subsystem

TSC
Server

MSC
Server

CSCF

BGCF

GMSC
Server

MRFC

HSS

MGCF

User
Equipment
& Access
Networks

MRFP

MG

SGSN

MG

SG

Service
&
External
Networks

GGSN

Connectivity Layer

PS Domain

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CAMARILLO et al.** *IETF, CH,* 29 November 2005, vol. xcon (6), ISSN 0000-0004, tools.ietf.org/id/draft-ietf-xcon-bfcp-06.txt